Europäisches Patentamt

European Patent Office

Office européen des brevets

(19)

(11) Numéro de publication:

**0 085 018**
**A1**

## (12) DEMANDE DE BREVET EUROPEEN

(21) Numéro de dépôt: **83440006.1**

(22) Date de dépôt: **17.01.83**

(51) Int. Cl.³: **H 02 K 53/00**

(30) Priorité: **19.01.82  FR 8200864**

(43) Date de publication de la demande: **03.08.83**
**Bulletin 83/31**

(84) Etats contractants désignés: **AT BE CH DE GB IT LI LU NL SE**

(71) Demandeur: **Flick, Martin, 4, Quai St-Thomas, F-67000 Strasbourg (FR)**
Demandeur: **Flick, Louise, 172, route du Polygone, F-67100 Strasbourg (FR)**
Demandeur: **Flick, Charlotte, épouse Rinn, 172, route du Polygone, F-67100 Strasbourg (FR)**

(72) Inventeur: **Flick, Martin, 4, Quai St-Thomas, F-67000 Strasbourg (FR)**

(74) Mandataire: **Nuss, Pierre, 10, rue Jacques Kablé, F-67000 Strasbourg (FR)**

(54) **Moteur magnétique, en particulier pour véhicules automobiles, ou analogues.**

(57) Moteur magnétique, en particulier pour véhicules automobiles, ou analogues, constitué par un rotor (1) portant à sa circonférence des aimants (6) permanents en forme de U et monté sur un arbre (2) tournant dans deux roues libres (3) servant de paliers, par un stator (4) muni d'impulseurs (7) sous forme d'aimants permanents en forme de U et mobile en translation et en va-et-vient par rapport au rotor (1), et par un ou plusieurs vérins pneumatiques (5) de déplacement du stator (4) relativement au rotor (1) commandés par des électrovannes.

1° FLICK Martin
   4, Quai St-Thomas
   STRASBOURG (Bas-Rhin, FRANCE)

2° FLICK Louise
   172, route du Polygone
   STRASBOURG (Bas-Rhin, FRANCE)

3° FLICK Charlotte, épouse RINN
   172, route du Polygone
   STRASBOURG (Bas-Rhin, FRANCE)

Moteur magnétique, en particulier pour véhicules automobiles, ou analogues

La présente invention concerne le domaine des moteurs, en particulier des moteurs de traction pour véhicules automobiles, et a pour objet un moteur magnétique destiné à cet effet.

Actuellement, les moteurs d'entraînement de véhicules automobiles sont généralement des moteurs à combustion interne. Cependant, du fait d'une raréfaction du combustible utilisé entraînant une forte hausse du prix de revient de ce dernier, le coût d'exploitation de tels moteurs devient de plus en plus élevé et grève lourdement le budget des utilisateurs des véhicules ainsi équipés.

2

Pour obvier à cet inconvénient, il a été proposé des véhicules munis d'un moteur électrique à courant continu alimenté au moyen de batteries. Toutefois, ces véhicules dits électriques sont généralement très lourds du fait de leur chargement en batteries, et leur autonomie est relativement faible par rapport à celle des véhicules classiques à moteur thermique.

La présente invention a pour but de pallier ces inconvénients.

Elle a, en effet, pour objet un moteur magnétique, en particulier pour véhicules automobiles, ou analogues, caractérisé en ce qu'il est constitué par un rotor portant à sa circonférence des aimants permanents en forme de U et monté sur un arbre tournant dans deux roues libres servant de paliers, par un stator muni d'impulseurs sous forme d'aimants permanents en forme de U et mobile en translation et en va-et-vient par rapport au rotor, et par un ou plusieurs vérins pneumatiques de déplacement du stator relativement au rotor commandés par des électrovannes.

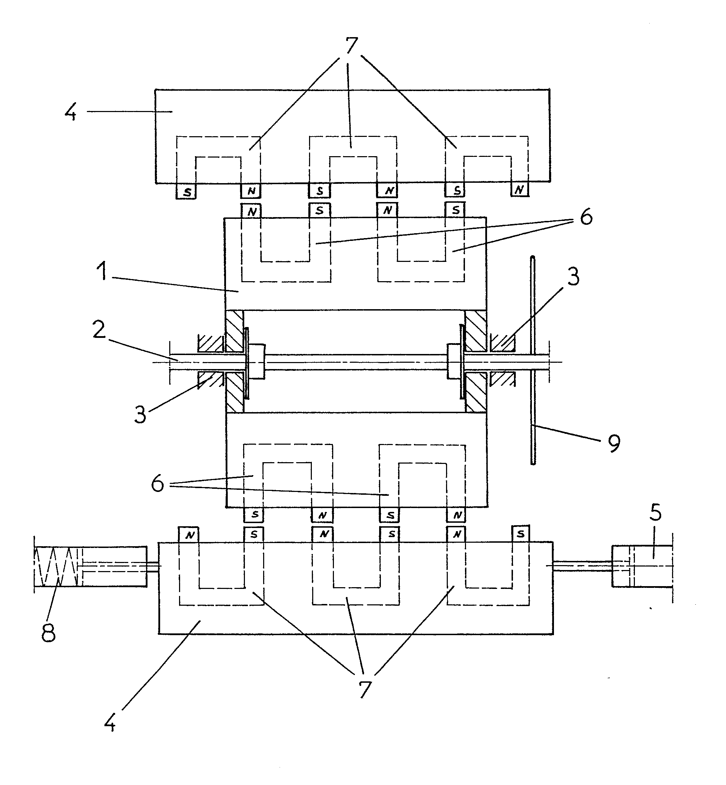

L'invention sera mieux comprise grâce à la description ci-après, qui se rapporte à un mode de réalisation préféré, donné à titre d'exemple non limitatif, et expliqué avec référence au dessin schématique annexé, dont la figure unique est une vue en coupe du moteur conforme à l'invention.

Le moteur magnétique représenté au dessin annexé est essentiellement constitué par un rotor 1 monté sur un arbre 2 tournant dans deux roues libres 3 formant paliers, par un stator 4 mobile en translation, et par un vérin pneumatique 5 de déplacement du stator 4 par rapport au rotor 1.

3

Le rotor 1 porte à sa circonférence des aimants permanents 6 en forme de U disposés en ligne par paires diamétralement opposées, de préférence avec un décalage angulaire de 90°, et avec une alternance des polarités.

Le stator 4 est muni d'impulseurs 7 sous forme de lignes d'aimants permanents en forme de U diamétralement opposées et avantageusement décalées de 90° avec une alternance des polarités, chaque ligne d'aimants comportant un aimant de plus que les lignes d'aimants du rotor 1.

Ce stator 4 est guidé concentriquement au rotor 1 en déplacement de translation et en va-et-vient par rapport à ce dernier d'une valeur correspondant à la longueur d'un aimant 6 ou 7, et son déplacement est obtenu grâce à un vérin pneumatique 5 à simple effet combiné avec un ressort de rappel 8 agissant sur l'extrémité opposée du stator 4, ou encore au moyen d'un vérin pneumatique double-effet, ce vérin étant alimenté en air ou en gaz comprimé à partir d'un réservoir ou de bouteilles interchangeables.

La commande du vérin 5 est réalisée grâce à une électrovanne (non représentée) dont le circuit électrique est fermé et ouvert au moyen d'un contact actionné par une came 9 solidaire de l'arbre 2 du rotor 1.

Dans la position représentée dans la figure du dessin annexé, les pôles N et S des aimants permanents en forme de U 6 et 7 du rotor 1 et du stator 4 sont placés en concordance et créent un moment de rotation dû à la force de répulsion. Ce moment provoque la rotation dudit rotor 1 d'un angle de 90° qui correspond à l'attraction des aimants de polarités différentes, les pôles S du rotor 1 étant alors devant les pôles N du stator 4, et les pôles N devant les pôles S. La came 9 actionne

4

alors, par l'intermédiaire d'un contact, l'électrovanne de commande du vérin pneumatique 5, qui déplace le stator 4 en translation par rapport au rotor 1 d'une longueur égale à la longueur des aimants 6 et 7 de manière à mettre en concordance les pôles de même polarité desdits aimants de sorte qu'il s'effectue une nouvelle rotation du rotor 1, l'électrovanne du vérin 5 est alors fermée et le stator 4 est ramené à sa position de départ par le ressort de rappel 8 et le cycle décrit ci-dessus se répète, la rotation s'effectuant automatiquement toujours dans un même sens grâce aux roues libres 3.

Le moteur décrit ci-dessus permet une rotation du rotor 1 grâce aux champs magnétiques permanents des aimants en forme de U 6 et 7, qui sont amenés dans les positions adéquates de travail grâce au vérin pneumatique 5.

Conformément à une variante de réalisation de l'invention, il est également possible de remplacer le ou les vérins 5 de déplacement du stator 4 par un ou plusieurs électro-aimants, de sorte que l'alimentation en air comprimé peut être supprimée et que le moteur fonctionne entièrement à l'électricité, augmentant l'autonomie d'un véhicule ainsi propulsé.

Grâce à l'invention, il est possible de réaliser un moteur de propulsion pour véhicule automobile, de construction simple, autorisant une marche silencieuse et non polluante, et fonctionnant avec une énergie facilement renouvelable et stockable et d'un faible prix de revient.

Bien entendu, l'invention n'est pas limitée au mode de réalisation décrit et représenté au dessin annexé.

5

Des modifications restent possibles, notamment du point de vue de la constitution des divers éléments, ou par substitution d'équivalents techniques, sans sortir pour autant du domaine de protection de l'invention.

1

REVENDICATIONS

1. Moteur magnétique, en particulier pour véhicules automobiles, ou analogues, caractérisé en ce qu'il est constitué par un rotor (1) portant à sa circonférence des aimants (6) permanents en forme de U et monté sur un arbre (2) tournant dans deux roues libres (3) servant de paliers, par un stator (4) muni d'impulseurs (7) sous forme d'aimants permanents en forme de U et mobile en translation et en va-et-vient par rapport au rotor (1), et par un ou plusieurs vérins pneumatiques (5) de déplacement du stator (4) relativement au rotor (1) commandés par des électrovannes.

2. Moteur, suivant la revendication 1, caractérisé en ce que le rotor (1) porte à sa circonférence des aimants permanents (6) en forme de U disposés en ligne par paires diamétralement opposées, de préférence avec un décalage angulaire de 90°, et avec une alternance des polarités.

3. Moteur, suivant l'une quelconque des revendications 1 et 2, caractérisé en ce que le stator (4) est muni d'impulseurs (7) sous forme de lignes d'aimants permanents en forme de U diamétralement opposées et avantageusement décalées de 90° avec une alternance des polarités, chaque ligne d'aimants comportant un aimant de plus que les lignes d'aimants du rotor (1).

4. Moteur, suivant l'une quelconque des revendications 1 à 3, caractérisé en ce que le stator (4)

2

est guidé concentriquement au rotor (1) en déplacement de translation et en va-et-vient par rapport à ce dernier d'une valeur correspondant à la longueur d'un aimant (6 ou 7), et son déplacement est obtenu grâce à un vérin pneumatique (5) à simple effet combiné avec un ressort de rappel (8) agissant sur l'extrémité opposée du stator (4), ou encore au moyen d'un vérin pneumatique double-effet, ce vérin étant alimenté en air ou en gaz comprimé à partir d'un réservoir ou de bouteilles interchangeables.

5. Moteur, suivant l'une quelconque des revendications 1 et 4, caractérisé en ce que la commande du vérin (5) est réalisée grâce à une électrovanne dont le circuit électrique est fermé et ouvert au moyen d'un contact actionné par une came (9) solidaire de l'arbre (2) du rotor (1).

6. Moteur, suivant la revendication 1, caractérisé en ce que le ou les vérins (5) de déplacement du stator (4) sont remplacés par un ou plusieurs électro-aimants, de sorte que l'alimentation en air comprimé est supprimée et que le moteur fonctionne entièrement à l'électricité.

### Office européen des brevets

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | ABSTRACTS OF JAPAN, vol. 5, no. 74, (E-57)(746), 16 mai 1981 & JP - A - 56 22586 (TAKESHI KURODA) 03-03-81 * En entier * | 1-4 | H 02 K 53/00 |
| A | FR-A-2 427 730 (BERRIE) * Page 1, lignes 9-19; figure 1 * | 1,4,5 | |
| A | FR-A-2 470 473 (GAY) * Page 1, lignes 14-27 * | 1,5 | |
| A | FR-A-2 403 678 (BAUD) * Page 5, lignes 26-37; figure 5 * | 1,6 | |
| | ----- | | DOMAINES TECHNIQUES RECHERCHES (Int. Cl. ³) H 02 K |

Le présent rapport de recherche a été établi pour toutes les revendications

| Lieu de la recherche LA HAYE | Date d'achèvement de la recherche 15-04-1983 | Examinateur STEINMETZ L.J.P. |
|---|---|---|